# EUROPÄISCHE PATENTANMELDUNG

(11) **EP 3 270 662 A1**
(43) Veröffentlichungstag der Anmeldung: **17.01.2018**
(21) Anmeldenummer: 17179789.7
(22) Anmeldetag: 05.07.2017
(51) Int. Cl.: H05B 6/12

(54) **VERWENDUNG VON ELEKTROMAGNETOPHORETISCHEM MATERIAL ALS ANZEIGE AN EINEM ELEKTROKOCHGERÄT, ANZEIGE SOWIE ANZEIGEVERFAHREN**

(30) Priorität: 12.07.2016 DE 102016212648
(71) Anmelder: E.G.O. Elektro-Gerätebau GmbH, 75038 Oberderdingen (DE)
(72) Erfinder: OSE, Lutz, 75447 Sternenfels (DE); THIMM, Wolfgang, 76137 Karlsruhe (DE)
(74) Vertreter: Patentanwälte Ruff, Wilhelm, Beier, Dauster & Partner mbB

(57) **Zusammenfassung**

Als optische Anzeige (18a, 18b) an einem Induktionskochfeld (11) sind rund um eine Kochstelle (16) mit Induktionsheizspule (15) Schichten (19, 20) mit elektromagnetophoretischem Material (19, 20) vorgesehen. Bei Betrieb der Induktionsheizspule (15) ändert es seine optischen Eigenschaften. Wenn es also vorher durchsichtig war, kann es nun also intransparent sein und bildet somit eine Anzeige (18a, 18b), die von einer Bedienperson erkannt werden kann. Alternativ kann das elektromagnetophoretische Material (19, 20) seine Farbe wechseln. So kann eine automatische Betriebsanzeige der Induktionsheizspule (15) und an dem Induktionskochfeld (11) geschaffen werden.

## Beschreibung

Die Erfindung betrifft die Verwendung von elektromagnetophoretischem Material als Anzeige, beispielsweise an einem Elektrokochgerät wie einem Kochfeld odgl., sowie eine entsprechende Anzeige und ein Anzeigeverfahren.

Aus der EP 1317164 A1 ist eine Vorrichtung zur Markierung einer Induktionsspule an einem Induktionskochfeld bekannt. Dabei sind LED um eine Induktionsspule an einem Kochfeld herum angeordnet und werden durch Spulen elektrisch versorgt, in denen bei Betrieb der Induktionsspule eine Spannung induziert wird. So kann beispielsweise eine automatische Betriebsanzeige für die Induktionsheizspule realisiert werden.

Aus der DE 102005025896 A1 ist es bekannt, an einer Kochfeldplatte eines Induktionskochfeldes Bereiche oder Materialien vorzusehen, die unterschiedliche optische Transmissions-Eigenschaften aufweisen. Dadurch können sowohl eine Betriebs- bzw. Heißanzeige als auch eventuell eine Temperaturerfassung realisiert werden. Des Weiteren ist es daraus auch bekannt, thermochromes Material an einem Kochfeld zu verwenden. Dieses ändert seine Farbe in Abhängigkeit von seiner Temperatur und eignet sich somit ebenfalls sehr gut für eine Heißanzeige an einem Kochfeld. Unter anderem ist hier auch beschrieben, dass photonische Kristalle in der Kochfeldplatte bzw. einer Beschichtung einer Kochfeldplatte vorgesehen sein können. Diese haben auch für eine Temperatur-Auswertung mit IR-Strahlung Vorteile.

### AUFGABE UND LÖSUNG

Der Erfindung liegt die Aufgabe zugrunde, eine eingangs genannte Verwendung, eine Anzeige sowie ein Anzeigeverfahren zu schaffen, mit denen Nachteile des Standes der Technik vermieden werden können und insbesondere eine Anzeige unter Verwendung von Materialien realisiert werden kann, die ihre optischen Eigenschaften unter möglicherweise gezielter Einwirkung verändern.

Gelöst wird diese Aufgabe durch eine Verwendung mit den Merkmalen des Anspruchs 1, eine Anzeige gemäß Anspruch 12 oder ein Anzeigeverfahren gemäß Anspruch 14. Vorteilhafte sowie bevorzugte Ausgestaltungen der Erfindung sind in den weiteren Ansprüchen angegeben und werden im Folgenden näher erläutert. Dabei werden manche der nachfolgenden Merkmale nur für die Verwendung, nur für die Anzeige oder nur für das Anzeigeverfahren beschrieben. Sie sollen jedoch unabhängig davon sowohl für die Verwendung als auch für die Anzeige und für das Anzeigeverfahren selbständig und unabhängig voneinander gelten können. Der Wortlaut der Ansprüche wird durch ausdrückliche Bezugnahme zum Inhalt der Beschreibung gemacht.

Es ist vorgesehen, dass elektromagnetophoretisches Material, das im Folgenden als EMP-Material bezeichnet wird, als Anzeige bzw. in Anzeigemitteln verwendet bzw. eingesetzt ist und dazu nahe oder unmittelbar an einer Gehäusewand oder Abdeckung der Anzeige bzw. des Elektrogeräts angeordnet bzw. befestigt ist. Dies kann insbesondere eine Funktions- oder Informationsanzeige sein, beispielsweise an einem Elektrokochgerät, also etwa einem Kochfeld oder Backofen. Das EMP-Material kann dabei vorteilhaft in Form einer Schicht bzw. Beschichtung oder mindestens einer dünnen Platte vorliegen, die nahe oder unmittelbar an einer Gehäusewand oder Abdeckung der Anzeige bzw. des Elektrogeräts angeordnet ist.

Erfindungsgemäß ist vorgesehen, dass in der Nähe dieses EMP-Materials schaltbare Induktionsmittel bzw. sogenannte Magnetisierungsmittel angeordnet sind. Bevorzugt ist dies eine Induktionsspule, die besonders leicht an- und abgeschaltet werden kann, besonders bevorzugt eine Induktionsheizspule. Die genaue Ausbildung von derartigem EMP-Material kann vom Fachmann aus der EP 2724717 A1, der KR 102012130153 A1 oder der US 2013/044048 A1 entnommen werden. Derartiges EMP-Material kann bei der Fa. Nanobrick Co. in Korea bezogen werden. Nähere Informationen, insbesondere zur Abhängigkeit von Feldstärke und Farbe, können in der Schrift "Highly Tunable Superparamagnetic Colloidal Photonic Crystals", Jianping Ge, Yongxing Hu, and Yadong Yin in Angew. Chem., Int. Ed. 2007, 46, 7428 - 7431, gefunden werden.

Dieses EMP-Material ermöglicht es, bei Anlegen oder Ändern eines Magnetfeldes, in dessen Wirkungsbereich es sich befindet, die optischen Eigenschaften so zu ändern, dass es beispielsweise vom undurchsichtigen Zustand in einen durchsichtigen Zustand überwechselt oder anders herum. In ähnlicher Form kann ein Farbwechsel stattfinden, beispielsweise von grün nach schwarz oder anders herum. So können auch leicht verständliche Signalfarben verwendet werden, wie rot oder grün, die dann beispielsweise jeweils einen inaktiven Zustand oder einen aktiven Zustand anzeigen.

Durch das herangeführte oder sich ändernde Magnetfeld der Magnetisierungsmittel bzw. Induktionsmittel wird also das EMP-Material beeinflusst, und zwar so, dass sich seine optischen Eigenschaften ändern. Dies kann entweder seine Durchlasseigenschaften betreffen, also die Transmission. Alternativ kann es seine Reflektionseigenschaften betreffen, also die Reflexion. Es kann auch seine Farbeigenschaften betreffen. In Zusammenwirken mit einem jeweiligen Aufbau der Anzeige kann so dieses "optische Umschalten" für eine Bedienperson sichtbar sein oder sichtbar gemacht werden, um eben die Anzeigefunktion zu realisieren. Darauf wird nachfolgend noch im Einzelnen eingegangen. Ebenso wird auch noch darauf eingegangen, wie genau diese Änderung des Magnetfeldes erzeugt werden kann.

Bei einer Ausführung der Erfindung ist das EMP-Material so an der Anzeige angeordnet, dass es direkt sichtbar ist. So ist für eine Bedienperson der Wechsel der optischen Eigenschaften bzw. das veränderte optische Aussehen direkt zu erkennen. Eine Möglichkeit ist hier eine Anordnung unter einer Abdeckung, Gehäusewand oder Blende, die im Wesentlichen durchsichtig ist, also beispielsweise aus durchsichtigem Glas, Hartglas oder Kunststoff besteht.

Bei einer anderen Ausführung der Erfindung ist das EMP-Material auf einer Abdeckung, Gehäusewand oder Blende des Elektrogeräts angeordnet. Damit ist man unabhängig von den optischen Eigenschaften der Abdeckung selber, da das EMP-Material bzw. sein Wechsel in der optischen Erscheinung sowieso sichtbar ist. Es kann also auch eine undurchsichtige Abdeckung verwendet werden.

In weiterer Ausgestaltung der Erfindung kann das EMP-Material vor Leuchtmitteln bzw. vor einer Leuchtanzeige angeordnet sein und diese beispielsweise bedecken. In diesem Fall wird das EMP-Material als eine Art Blende angesehen, die zum Beispiel üblicherweise die Leuchtmittel abdeckt bzw. dafür sorgt, dass sie nicht sichtbar sind. Bei Anlegen des Magnetfeldes bzw. Ändern ihrer optischen Eigenschaften dagegen wird das EMP-Material durchsichtig und so wird dann das Leuchtmittel sichtbar. Auf diese Art und Weise kann eine Anzeigefunktion für eine Bedienperson realisiert werden.

Gemäß einer alternativen Ausgestaltung der Erfindung kann das EMP-Material hinter Leuchtmitteln oder einer Anzeige angeordnet sein, insbesondere einer Leuchtanzeige. Dann werden vor allem die vorgenannten reflektierenden Eigenschaften genutzt, die in Abhängigkeit von einem Magnetfeld verändert werden können, also beispielsweise als eine Art Reflektionsgitter. Dabei kann es beispielsweise möglich sein, dass eine Anzeige für eine Bedienperson eben erst dann sichtbar ist, wenn das EMP-Material bzw. eine daraus bestehende Schicht reflektierend wird durch Anlegen eines Magnetfeldes.

Vorteilhaft sind in einer Ausgestaltung der Erfindung Leuchtmittel bzw. eine Leuchtanzeige elektrisch aktiv bzw. elektrisch aktivierbar, insbesondere als LED. Dadurch lassen sich gute erkennbare Leuchtstärken realisieren und man kann so verlässliche und erprobte Leuchtmittel verwenden.

In alternativer Ausgestaltung der Erfindung können die Leuchtmittel lumineszentes Material aufweisen, um durch die Anzeige bzw. durch eine lichtdurchlässige Abdeckung der Anzeige eintretendes Umgebungslicht zu speichern und abzugeben. So kann auf eine Stromversorgung samt Verkabelung verzichtet werden und dennoch ein Leuchteffekt erreicht werden. Ebenso kann eine Temperaturgrenze verschoben werden im Vergleich zum Einsatz von LED oder sonstigen üblichen Leuchtmitteln in Elektrogeräten. Dazu wird lumineszentes Material benötigt, das auch bei höheren Temperaturen über 120°C stabil und funktionstauglich ist.

In weiterer Ausgestaltung der Erfindung kann das EMP-Material nach Art einer Schicht odgl. unter einer im Wesentlichen durchsichtigen Abdeckung angeordnet sein. Hierbei ist es zwar nicht unbedingt sichtbar, kann jedoch bei Ändern seiner optischen Eigenschaften hin zu reflektierend, dass es also reflektierend ausgebildet ist, Umgebungslicht so durch die Abdeckung zurückreflektieren, dass dies von einer Bedienperson deutlich als Anzeige wahrgenommen werden kann. Dabei kann, wie auch in den anderen Fällen, das EMP-Material in Form von Symbolen oder Beschriftungen ausgebildet sein, die sie als Anzeige darstellen sollen.

Funktioniert das EMP-Material bei Anordnung unter einer lichtdurchlässigen Abdeckung als eine Art Blende, lässt also Licht hindurch nach Anlegen eines Magnetfelds, so kann darunter noch einmal ein Leuchtmittel vorgesehen sein. Dieses kann so ausgebildet sein, dass es das lichtdurchlässige gewordene EMP-Material durch strahlt und so eine erkennbare Anzeige geschaffen wird.

Als Induktionsmittel bzw. Magnetisierungsmittel können vorteilhaft Spulen verwendet werden. Eine besonders vorteilhafte Möglichkeit ist eine Induktionsspule unter einer Abdeckung. Dies ist beispielsweise als Induktionsheizspule bei einem Induktionskochfeld eine sehr vorteilhafte Möglichkeit. Das EMP-Material befindet sich dann in dem Wirkungsbereich der Induktionsheizspule, wenn ein zu erhitzender Gegenstand, insbesondere ein Kochgeschirr, auf die Abdeckung aufgesetzt ist. Besonders vorteilhaft befindet sich das EMP-Material dabei außerhalb der Induktionsheizspule derart, dass es erwartungsgemäß außerhalb des zu erhitzenden Gegenstandes ist, so dass es noch sichtbar ist. Gleichzeitig sollte es jedoch nicht zu weit entfernt von der Induktionsheizspule angeordnet sein, damit das zu erreichende Magnetfeld noch ausreichend stark ist für die gewünschte Wirkung bzw. Änderung seiner optischen Eigenschaften.

Die Spule kann vorteilhaft mit Gleichstrom oder Wechselstrom, welcher bei Induktionsherden typischerweise im Bereich von 20 kHz bis 80 kHz liegt, oder einer Kombination von beiden, betrieben werden. Soll besondere Aufmerksamkeit erreicht werden, wie beispielsweise ein Blinken der Anzeige, kann die Frequenz im Bereich von 1 Hz liegen. Es ist auch Netzspannung im Bereich von 50 Hz bis 60 Hz zur Nutzung denkbar.

Entsprechende Frequenzen werden bei Induktionsherden über das Schalten von Leistungsschaltern bzw. Leistungshalbleitern gesteuert, vorteilhaft IGBT. Felder im Bereich von Spulen können durch Ferrite oder ähnliche Materialien mit geeigneter Formgebung beeinflusst und optimiert werden.

Ein Vorteil dieses EMP-Materials liegt auch in seiner gegenüber einer Anzeige mit LED erhöhten Temperaturbeständigkeit. Somit kann es näher an einer Heizeinrichtung angeordnet sein, beispielsweise auch näher an einer Strahlungsheizung bei einem Kochfeld.

In Ausgestaltung der Erfindung können zur Herstellung des EMP-Materials nur Materialien mit einer Temperaturbeständigkeit größer als 200°C verwendet werden, vorzugsweise größer als 300°C. Diese Temperaturbeständigkeit kann vorteilhaft auch für das fertige EMP-Material gelten.

Bei einem besonders vorteilhaften Ausführungsbeispiel der Erfindung nach zuvor genannter Art ist das EMP-Material ringartig um die Induktionsheizspule bzw. entlang einer ringartigen Kontur angeordnet. Vorteilhaft hat es einen geringen Abstand zu der Induktionsheizspule. Dieser geringe Abstand sollte wenige Zentimeter nicht überschreiten, beispielsweise maximal 5 cm betragen. Dann ist, wie zuvor geschildert, das Magnetfeld noch ausreichend stark. Es kann dabei entlang eines Teilrings oder geschlossenen Rings um die Induktionsheizspule angeordnet sein, unter Umständen kann es sogar einen im Wesentlichen geschlossenen Ring bilden. Es ist hier vorteilhaft möglich, insbesondere bei Anwendung in einem Induktionskochfeld, wenn das EMP-Material als ringartige Schicht auf die Oberseite oder auf die Unterseite der Kochfeldfläche aufgebracht wird. So ist es gemäß vorbeschriebener Ausführungsbeispiele deutlich sichtbar.

Bei einem Anzeigeverfahren für ein Elektrokochgerät mit einer Anzeige mit EMP-Material kann vorgesehen sein, dass das EMP-Material an einer Anzeige durch Einschalten oder Ausschalten bzw. Verändern eines Magnetfelds als Beeinflussung hinsichtlich seiner optischen Eigenschaften verändert wird. Diese veränderten optischen Eigenschaften können durch eine Bedienperson als Anzeige erfasst werden, wie es zuvor beschrieben worden ist. So kann alternativ zu fest an der Anzeige vorgesehenen Induktionsmitteln bzw. Magnetisierungsmitteln vorgesehen sein, dass beispielsweise das Ansetzen eines magnetischen Bedienelements, insbesondere entsprechend beispielsweise der DE 29605163 U1, das Magnetfeld zur Veränderung des EMP-Materials erzeugt. Das Bedienelement weist dabei vorteilhaft einen Dauermagneten auf. Wird ein solches Bedienelement an einer dafür vorgesehenen Position angebracht zur nachfolgenden Bedienung des Elektrogerätes damit, so kann eine Betriebsbereitschaft des Elektrogerätes durch eine sich ändernde Anzeige infolge der sich ändernden optischen Eigenschaften des EMP-Materials angezeigt werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1 bis 3: alternative Ausbildungen eines Induktionskochfeldes mit Induktionsheizspule und einer Anzeige mit EMP-Material,
- Fig. 4: eine Draufsicht auf das Induktionskochfeld gemäß Fig. 1 und
- Fig. 5: eine Bedienvorrichtung mit einem abnehmbaren magnetischen Drehknebel und einer Anzeige ähnlich Fig. 1.

### DETAILLIERTE BESCHREIBUNG DER AUSFÜHRUNGSBEISPIELE

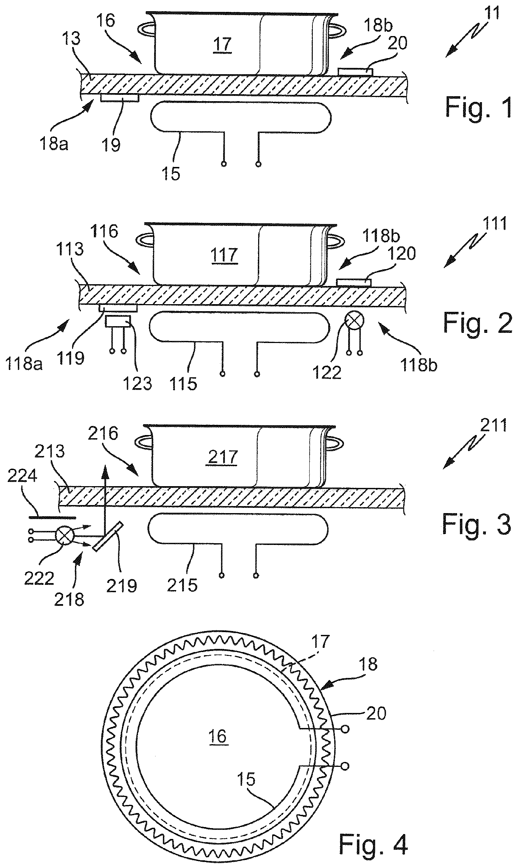

In Fig. 1 ist ein Induktionskochfeld 11 dargestellt. Es weist entsprechend einem üblichen Induktionskochfeld eine Kochfeldplatte 13 auf, unterhalb derer eine Induktionsheizspule 15 angeordnet ist. Deren Größe definiert eine Kochstelle 16, auf welche ein Kochgeschirr 17 als Kochtopf aufgesetzt ist. Dabei stimmen Durchmesser von Induktionsheizspule 15, Kochstelle 16 und Kochgeschirr 17 in etwa überein, bzw. sollten für eine möglichst optimale Erwärmung des Kochgeschirrs 17 bzw. seines Inhaltes übereinstimmen.

Des Weiteren ist eine erfindungsgemäße Anzeige 18a bzw. 18b vorgesehen. Hier sind zwar zwei Anzeigen gemeinsam dargestellt, in der Praxis ist jedoch jeweils nur eine vorhanden bzw. möglicherweise zwar mehrere, aber von derselben Art. Die Anzeige 18a weist eine Schicht 19 mit elektromagnetophoretischem Material bzw. EMP-Material auf, wie es zuvor beschrieben worden ist. Diese untere Schicht 19 ist an der Unterseite der Kochfeldplatte 13 angeordnet, und zwar etwas außerhalb oder angrenzend an die Fläche, die der Ausdehnung der Induktionsheizspule 15 bzw. der Kochstelle 16 entspricht. Sie kann sich zwar auch weiter zum Zentrum der Induktionsheizspule 15 hin erstrecken. Dann jedoch ist sie, wie aus Fig. 1 zu entnehmen ist, bei aufgesetztem Kochgeschirr 17, also bei Betrieb des Induktionskochfeldes 11, von dem Kochgeschirr 17 überdeckt und nicht mehr sichtbar, würde also kaum Nutzen bringen.

Die Anzeige 18b weist entsprechend eine obere Schicht 20 auf, die auch aus EMP-Material besteht bzw. dieses aufweist. Auch sie ist, wie dargestellt, sinnvollerweise außerhalb der Kochstelle 16 angeordnet bzw. grenzt an diese an. Neben den vorgenannten Gründen spielt hier auch eine Rolle, dass je nach mechanischer Beständigkeit der Schicht das Kochgeschirr 17 dann seltener auf die Schicht 20 aufgesetzt wird und diese somit weder beschädigen noch zerkratzen oder entfernen könnte.

Die Schichten 19 und 20 sind in der Darstellung von Fig. 1 stark übertrieben dick dargestellt. Dies ist in der Praxis sicherlich nicht notwendig, Schichtdicken von 1 mm und weniger werden als ausreichend angesehen. Dies gilt insbesondere für die obere Schicht 20, da sich hier eine zunehmende Dicke störend bemerkbar machen würde.

Zur Form oder Ausgestaltung der Schichten 19 und 20 wird zu den Fig. 2 bis 4 nachfolgend noch näheres erläutert. Grundsätzlich ist aber zu bemerken, wie zuvor schon ausgeführt, dass die Schichten des EMP-Materials, somit auch die Schichten 19 und 20, in beliebiger Form ausgebildet sein können, also sowohl als einfache Flächen als auch als Symbole, Schriftzeichen odgl..

In Fig. 1 ist zwar nicht der genaue Verlauf des Magnetfeldes bei Betrieb der Induktionsheizspule 15 dargestellt. Bei aufgesetztem Kochgeschirr 17, also dann, wenn die Induktionsheizspule 15 tatsächlich für längere Zeit in Betrieb ist, wird der größte Teil des Magnetfeldes im Boden des Kochgeschirrs gebündelt. Dennoch entsteht auch am Rand, also dort wo die Schichten 19 und 20 angeordnet sind, ein ausreichend starkes Magnetfeld oder Streufeld, um die vorgenannte Änderung der optischen Eigenschaften des EMP-Materials zu bewirken.

In Fig. 2 ist ein weiteres Induktionskochfeld 111 dargestellt in abgewandelter Form. An der Kochfeldplatte 113 mit der Induktionsheizspule 115 darunter ist wiederum auf einer Kochstelle 116 ein Kochgeschirr 117 aufgesetzt. Es sind wiederum zwei Anzeigen 118a und 118b mit EMP-Material dargestellt, ähnlich wie in Fig. 1. Allerdings sind hier jeweils darunter noch weitere Anzeigemittel angeordnet. Unter der unteren Schicht 119 ist eine Sieben-Segment-Anzeige 123 der bekannten Art angeordnet, die allgemein auch beleuchtet bzw. hinterleuchtet sein kann zur besseren Sichtbarkeit. Unter der rechten oberen Schicht 120 ist ein einfaches Leuchtmittel 122 angeordnet, beispielsweise eine einzelne LED, Glimmlampe odgl..

In der weiteren Abwandlung gemäß Fig. 3 weist ein wiederum prinzipiell gleiches Induktionskochfeld 211 als Anzeige 218 eine untere Schicht 219 mit dem EMP-Material auf. Sie ist schräg gestellt, so dass ein links davon angeordnetes Leuchtmittel 222, dass nach oben hin durch die Abschirmung 224 abgeschirmt ist und somit im aktiven Zustand nicht sichtbar ist, es anleuchtet und der theoretische Strahlenweg der Lichtstrahlen nach oben durch die Kochfeldplatte 213 umgelenkt wird.

### FUNKTION DER BESCHRIEBENEN AUSFÜHRUNGSBEISPIELE

Die Funktion der Anzeigen 18 bei den Ausführungen der Fig. 1 bis 3 ist folgende. Bei Fig. 1 ändert sich bei Einschalten der Induktionsheizspule 15 das optische Verhalten der Schichten 19 und 20 aus EMP-Material. Waren sie beispielsweise ohne Magnetfeld durchsichtig bzw. transparent, sind sie nun intransparent bzw. als Schicht oder eben als Symbol zu erkennen. Während dies bei der oberen Schicht 20 selbstverständlich ist, da sie im direkten Blickfeld liegt, ist für das Erkennen einer unteren Schicht 19, also unterhalb der Kochfeldplatte, eine im Wesentlichen durchsichtige Kochfeldplatte notwendig. Diese kann, insbesondere bei einem Induktionskochfeld, aus Hartglas bestehen und weist die notwendigen physikalischen Eigenschaften auf. So kann durch die Kochfeldplatte 13 hindurch die Zustandsveränderung der Schicht 19 erkannt werden und als Anzeigefunktion begriffen werden.

Bei den Anzeigen 118 gemäß Fig. 2 schirmen die Schichten 119 und 120 aus EMP-Material Leuchtmittel 122 ab. Während also in Fig. 1 zur Darstellung des Betriebes der Induktionsheizspule die Schichten ihre optischen Eigenschaften von transparent zu intransparent geändert haben, verläuft dies in Fig. 2 genau anders herum. Die ansonsten nicht transparenten Schichten 119 und 120 werden bei Betrieb der Induktionsheizspule 115 mit entstehendem Magnetfeld transparent bzw. lichtdurchlässig. Dadurch werden die darunter angeordneten Leuchtmittel 122 bzw. die Sieben-Segment-Anzeige 123 für eine Bedienperson sichtbar als Anzeige, vor allem wenn diese beleuchtet bzw. hinterleuchtet ist. Bei der Schicht 120 kann vorgesehen sein, dass entweder die Ausbildung der Schicht 120 oder eine sonstige Maskierung nicht nur einen Lichtfleck darstellt, erzeugt durch das Leuchtmittel 122, sondern ein bestimmtes Symbol.

Bei der Funktionsweise der Anzeige 218 gemäß Fig. 3 wiederum ist im deaktivierten Zustand der Induktionsheizspule 215 die Schicht 219 aus EMP-Material nicht reflektierend. Wird sie durch das Magnetfeld der Induktionsheizspule 215 bei deren Betrieb beeinflusst, so ändert sie ihre optischen Eigenschaften und wird reflektierend. Dadurch wird das Licht des Leuchtmittels 222 gemäß dem dargestellten Strahlenweg nach oben reflektiert und ist für eine Bedienperson als Betriebsanzeige der Kochstelle 216 erkennbar.

Weitere Ausbildungen von Anzeigen mit Schichten aus EMP-Material sind für den Fachmann aufgrund der vorgenannten Informationen leicht zu realisieren. Ebenso können außer den drei dargestellten Arten weitere Zustandsänderungen des EMP-Materials unter Einwirkung eines Magnetfeldes für Anzeigezwecke genutzt werden.

In Fig. 4 ist in Draufsicht auf das Induktionskochfeld 11 gemäß Fig. 1 dargestellt, wie die obere Schicht 20 sozusagen als geschlossener Ring um die Kochstelle 16 bzw. ein vorgesehenes Kochgeschirr 17 herum ausgebildet ist. Wird die Induktionsheizspule 15 betrieben, wie zuvor beschrieben, ändert die Schicht 20 ihre optischen Eigenschaften, wird beispielsweise intransparent oder ändert ihre Farbe oder ihr Reflexionsvermögen. Dies ist, insbesondere weil die Schicht 20 auf der Oberseite der Kochfeldplatte 13 aufgebracht ist, für eine Bedienperson als Anzeige 18 erkennbar. Ebenso kann, wie zuvor ausgeführt worden ist, auch eine untere Schicht 19 gemäß Fig. 1 in einer solchen ringartigen Form ausgebildet sein als Anzeige an der Unterseite der Kochfeldplatte 13.

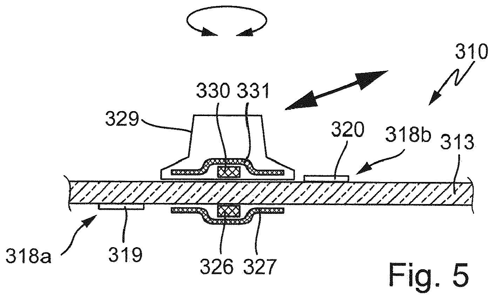

Ein weiteres Ausführungsbeispiel ist in Fig. 5 dargestellt als Bedieneinrichtung 310. Diese Bedieneinrichtung ist nach dem Prinzip der vorgenannten DE 29605163 U1 aufgebaut. Diesbezüglich wird deren Inhalt durch ausdrückliche Bezugnahme zum Inhalt dieser Beschreibung gemacht. An einer Abdeckung oder Gehäusewand 313 sind entweder untere Schichten 319 oder obere Schichten 320 mit dem genannten EMP-Material vorgesehen, wiederum in beliebiger Form oder flächiger Ausgestaltung. Unterhalb der Abdeckung 313 befindet sich ein unterer Magnet 326 samt unterem Magnetstern 327.

Dem feststehenden Magneten 326 gegenüber wird eine Stelle definiert, auf die ein abnehmbarer Drehknebel 329 zur Bedienung bzw. Eingabe von Befehlen aufgesetzt werden kann. Dieser Drehknebel 329 enthält einen zentralen Magneten 330 samt zugehörigem oberen Magnetstern 331. Wird gemäß der vorgenannten DE 29605163 U1 der Drehknebel 329 oberhalb des unteren Magneten 326 positioniert für eine anschließende Drehbetätigung, so löst das von ihm erzeugte Magnetfeld die genannten Veränderungen in den Schichten 319 oder 320 aus. Damit ändern diese, ähnlich wie bei Inbetriebnahme der Induktionsheizspule der vorherigen Ausführungsbeispiele, ihre optischen Eigenschaften im Rahmen sämtlicher zuvor genannter Möglichkeiten und bilden so ebenfalls eine Anzeige 318a bzw. 318b.

Bei dieser Ausführung ist allerdings darauf zu achten, dass nicht bereits das Magnetfeld des unteren Magneten 326 samt unterem Magnetstern 327 die Änderung der optischen Eigenschaften in den Schichten 319 und 320 bewirkt, sondern erst das Aufsetzen des Drehknebels 329. Dies ist jedoch für den Fachmann problemlos zu realisieren, beispielsweise durch zusätzliche Abschirmungen rund um den unteren Magneten 326 bzw. Magnetstern 327. Zusätzlich könnten im Außenbereich des Drehknebels 329 weitere Magneten angeordnet sein, beispielsweise um eine bestimmte Drehstellung ähnlich einer sonstigen optischen Markierung an einer bestimmten Stelle des Drehknebels anzuzeigen. An einem ähnlich Fig. 4 rund um den Drehknebel 329 verlaufenden Ring kann dann durch Drehung des Drehknebels sowie durch den an der Außenseite daran befestigten Magneten ein mitwandernder Bereich veränderter optischer Eigenschaften in der Schicht 319 oder 320 erzeugt werden. Dieser zeigt einer Bedienperson eben die Drehbewegung wie dies üblicherweise eine abstehende Pfeilspitze odgl. machen würde.

## Patentansprüche

1. Verwendung von elektromagnetophoretischem Material (19, 20, 119, 120, 219, 319, 320) als Anzeige (18, 118, 218, 318) bzw. in Anzeigemitteln, insbesondere als Funktions- oder Informations-Anzeige an einem Elektrokochgerät (11, 111, 211, 311), wobei das elektromagnetophoretische Material nahe oder unmittelbar an einer Gehäusewand oder Abdeckung (13, 113, 213, 313) der Anzeige (18, 118, 218, 318) angeordnet ist, **dadurch gekennzeichnet, dass** in der Nähe des elektromagnetophoretischen Materials schaltbare Induktionsmittel (15, 115, 215, 315) bzw. Magnetisierungsmittel (330) angeordnet sind, insbesondere eine Induktionsspule (15, 115, 215, 315).

2. Verwendung nach Anspruch 1, **dadurch gekennzeichnet, dass** das elektromagnetophoretische Material in Form einer Schicht (19, 20, 119, 120, 219, 319, 320) oder mindestens einer dünnen Platte an der Gehäusewand oder Abdeckung (13, 113, 213, 313) der Anzeige (18, 118, 218, 318) angeordnet ist.

3. Verwendung nach Anspruch 1 oder 2, **dadurch gekennzeichnet, dass** das elektromagnetophoretische Material (19, 20, 119, 120, 219, 319, 320) an der Anzeige (18, 118, 218, 318) direkt sichtbar angeordnet ist, insbesondere unter einer lichtdurchlässigen, vorzugsweise im Wesentlichen durchsichtigen, Abdeckung (13, 113, 213, 313).

4. Verwendung nach Anspruch 1 oder 2, **dadurch gekennzeichnet, dass** das elektromagnetophoretische Material (19, 20, 119, 120, 319, 320) an der Anzeige (18, 118, 318) direkt sichtbar angeordnet ist, insbesondere auf einer Abdeckung (18, 118, 318).

5. Verwendung nach einem der vorhergehenden Ansprüche, **dadurch gekennzeichnet, dass** das elektromagnetophoretische Material (120, 219) vor Leuchtmitteln (122, 222) bzw. vor einer Leuchtanzeige (123) angeordnet ist und diese insbesondere bedeckt bzw. überdeckt, wobei vorzugsweise die Leuchtmittel (122, 222) bzw. Leuchtanzeige elektrisch aktiv bzw. aktivierbar ist oder die Leuchtmittel lumineszentes Material aufweisen um durch die Anzeige (18, 118, 218, 318) bzw. durch eine lichtdurchlässige Abdeckung (13, 113, 213, 313) der Anzeige eintretendes Umgebungslicht zu speichern und abzugeben.

6. Verwendung nach einem der Ansprüche 1 bis 4, **dadurch gekennzeichnet, dass** das elektromagnetophoretische Material (219) hinter Leuchtmitteln (222) bzw. einer Leuchtanzeige angeordnet ist, insbesondere als Reflektionsmittel.

7. Verwendung nach einem der Ansprüche 1 bis 3, **dadurch gekennzeichnet, dass** das elektromagnetophoretische Material 19, 119, 219, 319) unter einer im Wesentlichen durchsichtigen Abdeckung (13, 113, 213, 313) der Anzeige (18, 118, 218, 318) angeordnet ist als Reflektionsmittel für Umgebungslicht zurück durch die Abdeckung nach außen.

8. Verwendung nach einem der vorhergehenden Ansprüche, **dadurch gekennzeichnet, dass** die Induktionsmittel eine Induktionsheizspule (15, 115, 215) unter einer Abdeckung sind (13, 113, 213, 313), deren Wirkbereich mit auf die Abdeckung der Anzeige (18, 118, 218, 318) aufgesetztem zu erhitzendem Gegenstand (17, 117, 217) das elektromagnetophoretische Material (19, 20, 119, 120, 219, 220, 319, 320) umfasst, wobei vorzugsweise die Anzeige (18, 118, 218, 318) bzw. die Anzeigemittel in einem Kochfeld (11, 111, 211, 311) eingebaut sind, wobei insbesondere das elektromagnetophoretische Material (20) ringartig oder entlang eines Rings zumindest teilweise um die Induktionsheizspule (15) herum angeordnet ist.

9. Verwendung nach einem der Ansprüche 1 bis 7, **gekennzeichnet durch** zusätzliche Induktionsmittel, die ausschließlich zur Beeinflussung des elektromagnetophoretischen Materials vorgesehen sind.

10. Verwendung nach einem der vorhergehenden Ansprüche, **dadurch gekennzeichnet, dass** zur Herstellung des elektromagnetophoretischen Materials (19, 20, 119, 120, 219, 220, 319, 320) nur Materialien mit einer Temperaturbeständigkeit größer als 200°C verwendet werden, vorzugsweise größer als 300°C, wobei insbesondere diese Temperaturbeständigkeit auch für das fertige elektromagnetophoretische Material gilt.

11. Verwendung nach einem der vorhergehenden Ansprüche, **dadurch gekennzeichnet, dass** sich die Eigenschaften des elektromagnetophoretischen Materials (19, 20, 119, 120, 219, 220, 319, 320) im sichtbaren Bereich ändern bzw. das Magnetfeld der Magnetisierungsmittel (15, 115, 215, 315, 330) entsprechend gewählt wird für eine Änderung im sichtbaren Bereich.

12. Anzeige (18, 118, 218, 318), insbesondere als Funktions- oder Informations-Anzeige an einem Elektrogerät oder Kochfeld (11, 111, 211, 311), mit elektromagnetophoretischem Material (19, 20, 119, 120, 219, 220, 319, 320), das nahe oder unmittelbar an eine Gehäusewand oder Abdeckung (13, 113, 213, 313) der Anzeige (18, 118, 218, 318) angeordnet ist, **dadurch gekennzeichnet, dass** in der Nähe des elektromagnetophoretischen Materials (19, 20, 119, 120, 219, 220, 319, 320) schaltbare Induktionsmittel (15, 115, 215, 315) bzw. veränderbare Magnetisierungsmittel (330) angeordnet sind, insbesondere eine Induktionsspule (15, 115, 215, 315).

13. Anzeige (18, 118, 218, 318) mit einem der kennzeichnenden Merkmale eines der Ansprüche 2 bis 11.

14. Anzeigeverfahren für ein Elektrokochgerät (11, 111, 211, 311), **dadurch gekennzeichnet, dass** elektromagnetophoretisches Material (19, 20, 119, 120, 219, 220, 319, 320) an einer Anzeige (18, 118, 218, 318) durch Einschalten oder Ausschalten bzw. Verändern eines Magnetfelds als Beeinflussung hinsichtlich seiner optischen Eigenschaften verändert wird zur Erfassung der veränderten optischen Eigenschaften durch eine Bedienperson als Anzeige.

15. Verfahren nach Anspruch 14, **dadurch gekennzeichnet, dass** die Beeinflussung das Annähern eines Magneten (330) an das elektromagnetophoretische Material (319, 320) ist, insbesondere eines Dauermagneten, durch eine Bedienperson, insbesondere beim Positionieren eines mit dem Magneten (330) versehenen Gegenstandes, vorzugsweise eines bedienbaren Bedienelements (329), an eine dafür vorgesehene Position an dem Elektrokochgerät (311) bzw. an der Anzeige (318).
